# FASCICULE DE BREVET EUROPEEN

(11) **EP 2 395 254 B1**
(45) Date de publication et mention de la délivrance du brevet: **13.11.2019**
(21) Numéro de dépôt: 11305722.8
(22) Date de dépôt: 09.06.2011
(51) Int. Cl.: F16C 1/26, F16C 1/06, F16C 1/12, F16C 1/24

(54) **Rallonge pour appareil d'entraînement motorisé, et outillage correspondant**
Verlängerung für ein motorisiertes Zuggerät, und entsprechendes Werkzeug
Extension lead for a motorised drive device and corresponding tool

(30) Priorité: 10.06.2010 FR 1002449
(43) Date de publication de la demande: 14.12.2011
(73) Titulaire: DASSAULT AVIATION, F-75008 Paris (FR)
(72) Inventeur: Le Gallic, Joël, 64600 Anglet (FR); Riotort, Hugues, 64240 Hasparen (FR)
(74) Mandataire: Lavoix

(56) Documents cités:
- FR-A1- 2 533 985
- FR-A1- 2 817 597
- US-A- 1 386 161
- US-A- 2 586 359
- US-A- 2 747 384
- US-A- 2 958 349
- US-A- 3 128 637
- US-A1- 2007 078 012
- US-A1- 2010 131 005

## Description

La présente invention est relative à une rallonge pour un appareil d'entraînement motorisé muni d'un arbre de sortie entraîné en rotation et en translation.

L'invention s'applique à diverses opérations qui nécessitent une rotation et une course d'avance d'un matériel indépendamment l'une de l'autre ou avec une combinaison des mouvements de rotation et d'avance. Il peut s'agir d'opérations de vissage/dévissage, d'opérations d'usinage telles que le perçage, l'alésage, le fraisurage, le lamage, le rainurage, le surfaçage, le chanfreinage, l'ébavurage, le meulage, etc. Il peut encore s'agir du déplacement de capteurs ou d'instruments de mesure, de contrôle ou de visualisation, ou bien du déplacement synchrone d'une fonction secondaire telle que l'apport ou le retrait d'un fluide (soufflage, aspiration, lubrification, ....) associée à un autre process en mouvement.

Dans ce qui suit, l'invention sera décrite dans le contexte d'une opération multiple de perçage/alésage en une seule passe, au moyen d'une machine à avance automatique.

Le but de l'invention est de conférer à l'outillage une grande simplicité d'emploi, une grande sécurité et un grand confort pour l'utilisateur, ainsi qu'une très bonne ergonomie, notamment pour des travaux d'usinage de précision à réaliser dans des zones à faible accessibilité.

A cet effet, l'invention a pour objet une rallonge pour un appareil d'entraînement motorisé muni d'un arbre de sortie entraîné en rotation et en translation, conforme à la revendication 1.

D'autres caractéristiques de la rallonge suivant l'invention sont décrites dans les revendications 2-15.

L'invention a également pour objet un outillage qui comprend :
- un appareil d'entraînement motorisé muni d'un arbre de sortie entraîné en rotation et en translation, cet arbre étant équipé d'un premier embout de fixation et le corps de l'appareil étant équipé d'un premier manchon de fixation ;
- une rallonge telle que définie ci-dessus, ledit premier connecteur d'entrée de couple étant adapté pour se fixer sur ledit embout de fixation et lesdits moyens proximaux de fixation étant adaptés pour se fixer sur ledit premier manchon de fixation ; et
- au moins un outil adapté pour être fixé à l'attache d'outil.

D'autres caractéristiques de cet outillage sont décrites dans les revendications 16-20.

Le document FR2553985 décrit une rallonge pour un appareil d'entraînement motorisé muni d'un arbre de sortie entraîné en rotation, possédant les caractéristiques décrites dans le préambule de la revendication 1.

Des exemples de réalisation de l'invention vont maintenant être décrits en regard des dessins annexés, sur lesquels :
- la Figure 1 représente en perspective un outillage d'usinage conforme à l'invention ;
- la Figure 2 est une vue partiellement en coupe longitudinale de l'appareil d'entraînement motorisé et de la rallonge de cet outillage ;
- la Figure 3 est une vue en coupe longitudinale et en perspective de la partie distale de la rallonge ;
- la Figure 4 représente en coupe longitudinale le raccordement de la rallonge à l'appareil d'entraînement motorisé ;
- la Figure 5 représente le flexible équipé d'un outil d'usinage ;
- la Figure 6 est une vue prise en coupe longitudinale suivant la ligne VI-VI de la Figure 5 ;
- la Figure 7 représente en perspective la partie d'extrémité distale du flexible équipée de l'outil d'usinage ;
- la Figure 8 représente le flexible de la rallonge ;
- la Figure 9 est une vue prise en coupe transversale suivant la ligne IX-IX de la figure 8 ;
- la Figure 10 représente, avec arrachement, la structure de la gaine flexible ;
- la Figure 11 représente la partie distale de la rallonge ;
- la Figure 12 est une vue en coupe illustrant une utilisation de l'outillage ;
- la Figure 13 représente en coupe axiale une variante, l'outil étant rétracté ;
- la Figure 14 est une vue analogue à la Figure 13, l'outil étant sorti ;
- la Figure 15 est une vue analogue à la Figure 12 d'une variante ; et
- la Figure 16 représente en coupe longitudinale une variante du flexible.

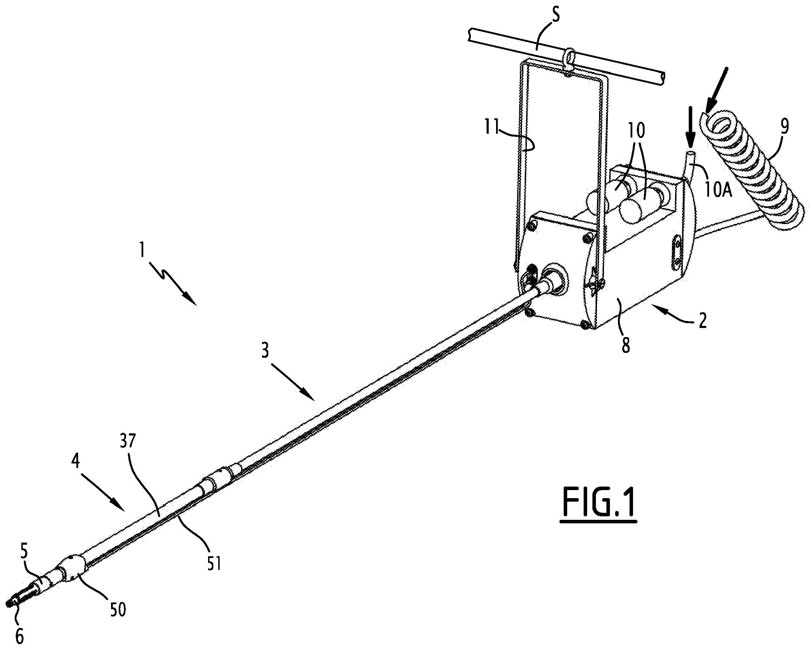

L'outillage d'usinage 1 représenté sur la Figure 1 est destiné à réaliser des opérations multiples de perçage/alésage de trous ou d'avant-trous dans une plaque, notamment métallique ou en matériau composite, qui fait typiquement partie d'un avion en cours de construction.

L'outillage 1 comprend une machine d'entraînement motorisée 2 à entraînement pneumatique, une première rallonge rigide 3, une seconde rallonge flexible 4, un canon de guidage d'outil 5 et un outil d'usinage 6.

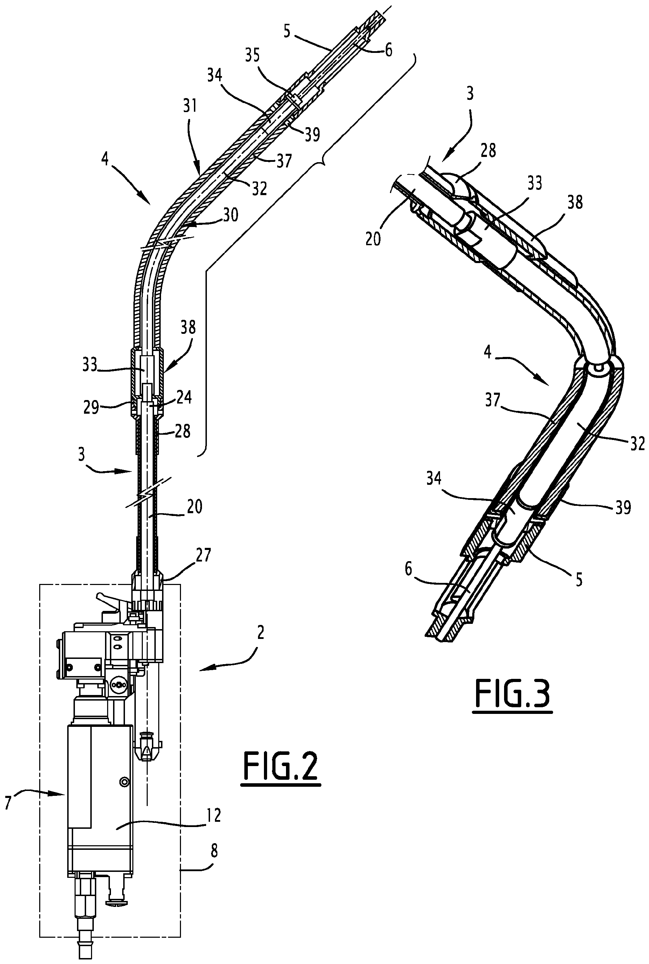

La machine 2 comprend un appareil d'entraînement motorisé 7 (Figure 2) entouré d'un capot d'insonorisation 8. L'appareil 7 est entraîné pneumatiquement via un tuyau flexible 9 d'alimentation en air comprimé, et l'échappement de l'air s'effectue à travers des silencieux 10 prévus sur le capot 8. L'appareil 7 est également alimenté en lubrifiant via un tuyau 10A.

Le capot 8 est muni d'un portique 11 de suspension à une structure fixe S de l'atelier d'usinage.

L'appareil 7 est un appareil connu en soi pour l'essentiel, muni d'un arbre de sortie entraîné à la fois en rotation et en avance/recul suivant son axe, sur une course prédéterminée réglable. Des exemples de tels appareils sont l'appareil décrit dans le US-A-4 752 161 et l'appareil commercialisé par la société RECOULES sous la référence 20952. C'est ce dernier appareil qui est illustré sur la figure 2.

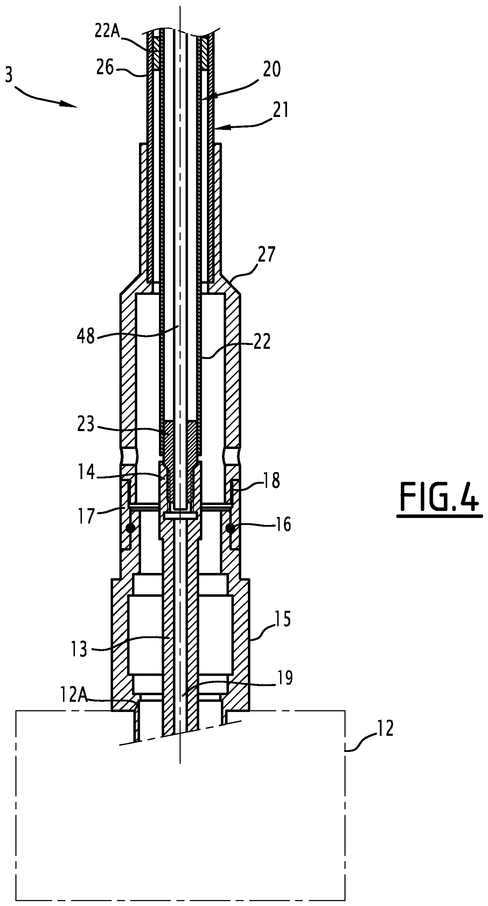

Pour les besoins du présent mémoire, il suffit de préciser que l'appareil 7 comporte un corps 12 qui contient des moyens, par exemple pneumatiques, d'entraînement en rotation et en avance/recul d'un arbre de sortie 13 (Figure 4). L'arbre 13 est creux et muni à son extrémité distale d'un embout de vissage femelle 14.

La partie distale de l'arbre 13 est entourée, avec un jeu radial, par un manchon adaptateur 15 fixé sur le corps 12 et pénétrant dans une ouverture de sortie 12A de celui-ci. L'extrémité distale du manchon 15 est équipée d'une bague d'indexage 17 librement rotative grâce à un jeu de billes 16. La partie distale de cette bague 17 présente un filetage intérieur 18.

Le canal central 19 de l'arbre 13 est alimenté en lubrifiant par son extrémité proximale, de façon classique.

La rallonge rigide 3 est constituée de deux sous-ensembles rigides indépendants l'un de l'autre, à savoir un sous-ensemble rigide intérieur 20 et un sous-ensemble rigide extérieur 21 qui entoure à distance le sous-ensemble 20.

Le sous-ensemble 20 est constitué d'un tube rigide 22 muni à son extrémité proximale (Figure 4) d'un embout mâle de vissage 23 adapté pour coopérer avec l'embout 14 de l'arbre 13, et à son extrémité distale d'un embout femelle de vissage 24 identique en configuration à l'embout 14.

Les embouts 23 et 24 présentent chacun un alésage central de même diamètre.

Le tube 22 est fixé aux embouts 23 et 24 par collage.

Le sous-ensemble rigide extérieur 21 est constitué d'un tube rigide extérieur 26 muni à chaque extrémité d'un manchon de raccordement auquel il est fixé par collage.

Le jeu entre le tube rigide 22 et le tube rigide 26 est maintenu grâce à des bagues-paliers 22A (Figure 4).

Le manchon proximal 27 (Figure 4) forme une tulipe évasée vers l'arrière et munie à son extrémité proximale d'un filetage extérieur adapté pour coopérer avec le filetage 18 de la bague 17. Le manchon distal 28 (Figure 2) présente un filetage intérieur analogue au filetage 18.

La rallonge flexible 4 est constituée de deux sous-ensembles flexibles indépendants l'un de l'autre, à savoir un sous-ensemble flexible intérieur 30 et un sous-ensemble flexible extérieur 31 qui entoure à distance le sous-ensemble 30.

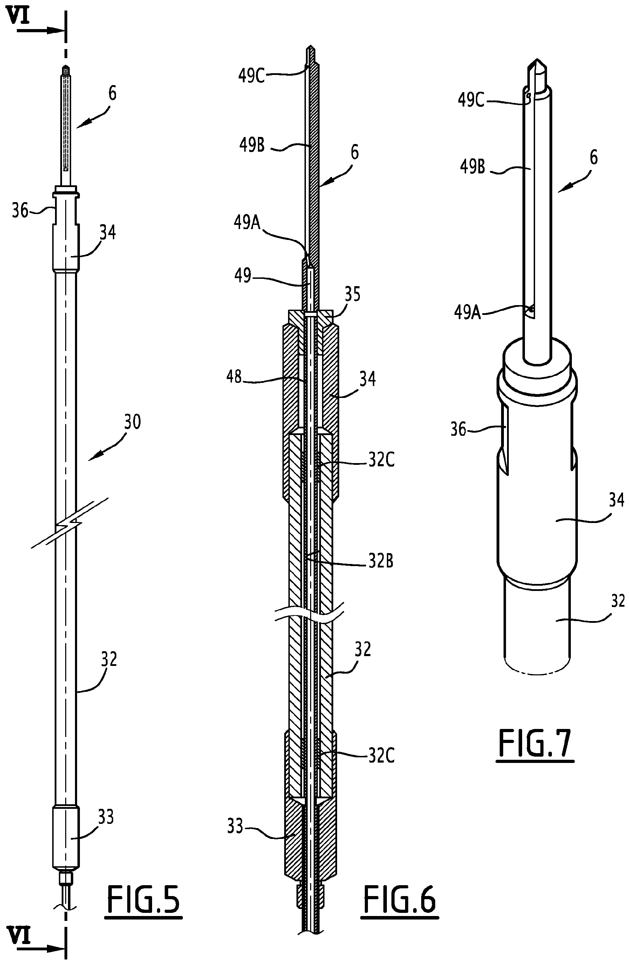

Le sous-ensemble 30 (Figures 5 à 7) est constitué d'un flexible 32 creux, adapté pour transmettre les couples et les efforts de poussée et de traction. Sur chaque extrémité de ce flexible est serti un embout de raccordement. L'embout proximal 33, qui forme un connecteur d'entrée de couple, possède la même configuration de vissage que l'embout 23 du sous-ensemble rigide 20, tandis que l'embout distal 34 forme une attache d'outil et comporte un taraudage adapté pour recevoir l'embase filetée creuse 35 de l'outil d'usinage 6. L'embout 34 présente extérieurement deux méplats 36 permettant de le maintenir pendant le vissage de l'embase 35.

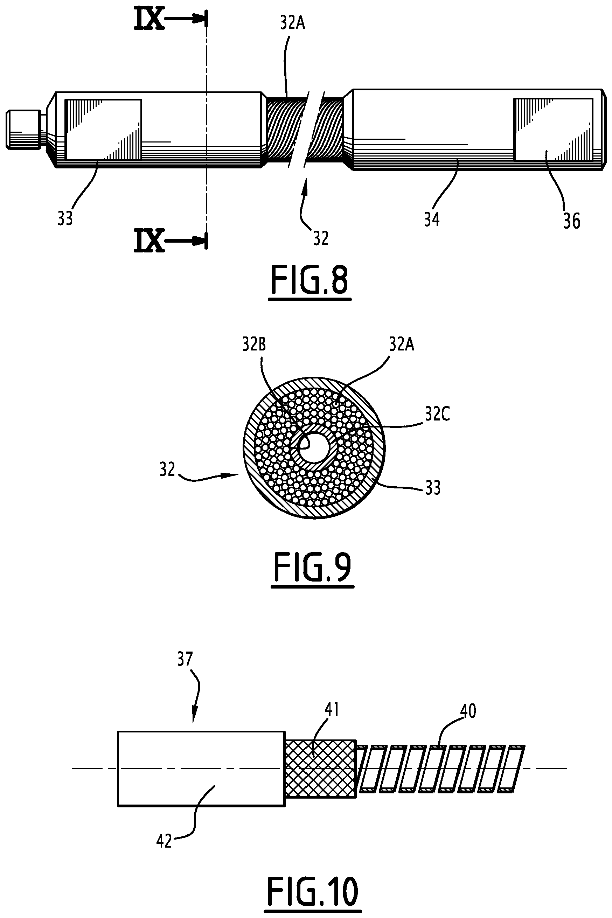

Le flexible 32 (Figures 8 et 9) est réalisé par enroulement en hélice, sous forte précontrainte, de plusieurs nappes alternées 32A de fils d'acier à ressort. Lors de l'enroulement, ces fils sont tendus bien au delà de leur limite d'élasticité, au voisinage de leur seuil de rupture, pour assurer la plus grande cohésion possible des différentes spires entre elles. Les hélices successives ont des pas de sens opposés. L'hélice intérieure est enroulée sur un mandrin, lequel est ensuite retiré pour définir le canal central 32B du flexible. Malgré le retrait du mandrin, la cohésion de l'ensemble reste assurée grâce à la tension résiduelle présente dans les fils d'acier.

Dans cet exemple, on utilise 25 fils, de diamètre 0.6 mm, répartis en cinq nappes ayant chacune cinq fils.

Deux bagues 32C sont placées à l'intérieur du canal 32B au niveau des pièces 33 et 34, afin de servir de contre-appui lors du sertissage de ces pièces sur les extrémités du flexible, ce sertissage renforçant encore davantage la cohésion de l'ensemble 30.

Le sous-ensemble flexible extérieur 31 (Figures 2, 3 et 10) est constitué d'une gaine flexible 37 sur chaque extrémité de laquelle est fixé par collage un manchon de raccordement. Les manchons de raccordement proximal 38 et distal 39 ont respectivement la même configuration de vissage que les manchons 27 et 28 de la rallonge rigide 3.

Comme représentée sur la Figure 10, la gaine 37 peut être une gaine en caoutchouc type G de la société SUHNER, et comprend une hélice en acier plat 40 entourée d'une enveloppe 41 en fibre textile, elle-même entourée d'une double couche de Néoprène®42.

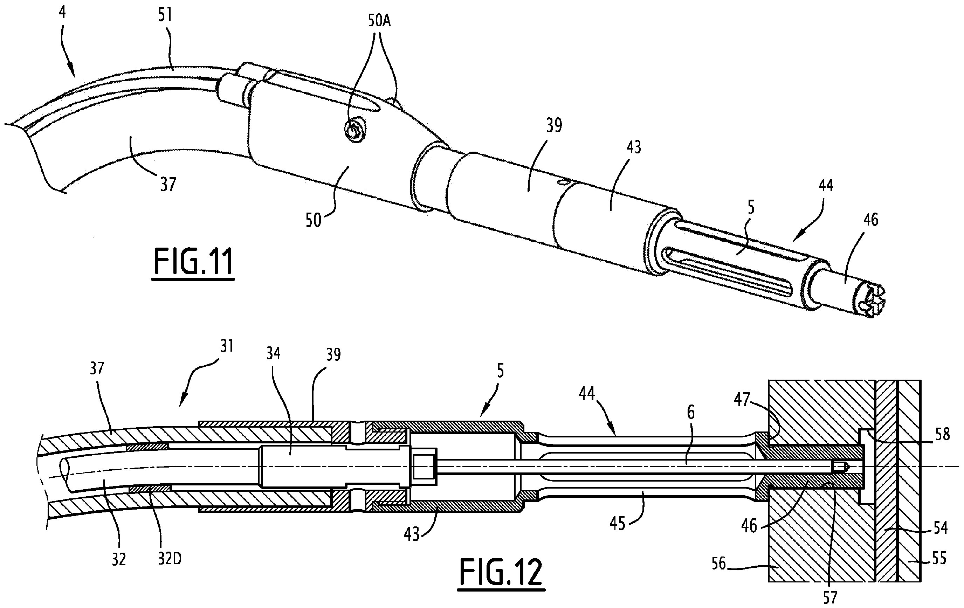

Le jeu radial entre la gaine 37 et le flexible 32 est suffisamment petit pour éviter un flambage excessif du flexible 32 à l'intérieur de la gaine, et suffisamment grand pour éviter un frottement excessif entre ces deux éléments. Dans l'exemple illustré, ce jeu est d'environ 0,2 mm. Ce jeu est maintenu grâce à des bagues-paliers 32D (Figure 12) interposées entre le flexible 32 et la gaine 37.

Les bagues-paliers 32D sont dans un matériau thermo rétractable. Elles sont disposées autour du flexible 32 puis chauffées afin de se plaquer solidairement contre le flexible 32. En variante, ces bagues paliers 32D sont des bagues fendues.

Le canon 5 est une pièce rigide qui comporte une partie proximale 43 de grand diamètre (Figure 12) vissée sur le manchon 39, une partie intermédiaire 44 de diamètre plus petit ajourée par plusieurs lumières longitudinales 45, et une partie distale 46 de petit diamètre, adaptée pour guider l'outil 6. Un épaulement radial extérieur 47 est prévu entre les parties 44 et 46.

Un tube capillaire flexible 48 s'étend le long des deux rallonges 3 et 4, de l'embout 23 à l'embase 35 de l'outil 6, afin de conduire le lubrifiant de l'appareil 7 à l'outil 6. Ce dernier comporte un conduit axial 49 (Figure 6) qui traverse l'embase 35 et une partie de la mèche de l'outil, et qui débouche par un orifice 49A dans une gougeure 49B ménagée dans la surface latérale de cette mèche. Le conduit 49 se prolonge le long de la mèche et débouche par un autre orifice 49C près de l'extrémité distale de la gougeure 49B.

Pour assembler l'outillage, on enfile le tube 48 dans le tube rigide 22, on visse l'embout 23 sur l'embout 14, on enfile ensuite le tube 48 dans le flexible 32, avec les bagues 32C qui assurent un guidage de ce tube 48 dans ce flexible 32. On visse ensuite l'embout 33 sur l'embout 24 et l'embase 35 de l'outil sur l'embout 34.

Ensuite, on enfile le tube 26 en passant autour de l'outil 6, du flexible 32 et du sous-ensemble 20 jusqu'à visser le manchon 27 sur la bague 17.

Enfin, on enfile le sous-ensemble flexible extérieur 31 en passant autour de l'outil 6 et du flexible 32 jusqu'à visser le manchon 38 sur le manchon 28, on enfile le canon 5 sur l'outil et on le visse sur le manchon 39.

Comme on le voit sur la Figure 11, la gaine 37 de la rallonge 4 est entourée au voisinage de son extrémité distale par une poignée 50 de préhension et de commande (non représentée sur les autres figures) munie de deux boutons de commande 50A. Cette poignée est reliée à l'appareil 7 par des tuyaux 51 et est agencée de façon qu'en cas de relâchement de l'un au moins des boutons 50A, l'appareil 7 est mis automatiquement à l'arrêt.

En variante, une commande au pied de l'appareil 7 peut être utilisée.

La Figure 12 illustre l'utilisation de l'outillage pour réaliser une série de perçages/alésages dans deux plaques ou tôles 54, 55 accolées, en vue d'assembler mécaniquement ces deux pièces par rivetage, boulonnage, ....

Pour cela, une grille de guidage 56 est positionnée sur la pièce 54. Cette grille possède une série de trous cylindriques 57 ayant comme diamètre le diamètre extérieur de la partie distale 46 du canon 5. Chaque trou comporte un lamage 58 à son extrémité adjacente à la pièce 54 pour un meilleur stockage des copeaux pendant l'usinage.

L'outil 6 étant rétracté dans le canon 5, l'opérateur insère la partie 46 de celui-ci dans un trou 57, jusqu'à ce que l'épaulement 47 bute contre la grille. Cette opération est rendue aisée par la flexibilité de la rallonge 4 et, éventuellement, par la suspension du portique 11 (Figure 1), qui permet à l'appareil 7 de s'orienter de lui-même vers le point de travail. De plus, la présence de la bague 17 (figure 4) permet d'éviter tout risque de déconnexion intempestive des rallonges par torsion de la gaine 37 et donne un degré de liberté supplémentaire pour la manipulation de l'outillage par l'opérateur.

Puis l'opérateur enfonce simultanément les boutons 50A de la poignée 50, ce qui déclenche un cycle de travail préréglé : entraînement en rotation de l'outil et, simultanément, entraînement en translation de cet outil avec une course et une vitesse d'avance prédéterminées, puis retour automatique, avec arrêt progressif de la rotation, jusqu'à la position de départ.

Le perçage est ainsi réalisé de façon précise, sans vibration, sans danger et sans effort pénible pour l'opérateur. Il est à noter que l'élasticité de la rallonge 4 et le poids de la main de l'opérateur et de l'outillage lui-même suffisent généralement pour bloquer le canon en position pendant le perçage et reprendre l'effort axial.

De plus, le travail est rendu moins pénible par l'éloignement de l'appareil 7. Cet éloignement a permis de prévoir un carénage et l'utilisation des silencieux 10, qui sont des équipements encombrants qui ne pourraient pas être installés si l'utilisateur devait porter l'appareil 7.

En variante, la rallonge rigide 3 peut ne pas être utilisée, auquel cas la rallonge flexible 4 est directement raccordée sur la sortie de l'appareil 7.

En variante également, la rallonge 4 peut être non rectiligne mais rigide, par utilisation d'une gaine 37 rigide ayant la configuration désirée pour atteindre un emplacement de travail peu accessible.

En variante également, la bague 17 (figure 4) peut être supprimée, le manchon 27 se vissant alors directement sur le manchon 15.

Comme on le comprend, plusieurs outillages similaires peuvent être utilisés simultanément, par exemple en étant portés par un robot.

En variante encore, un ou plusieurs des sous-ensembles 20, 21, 30 et 31 peuvent être réalisés sous forme monobloc.

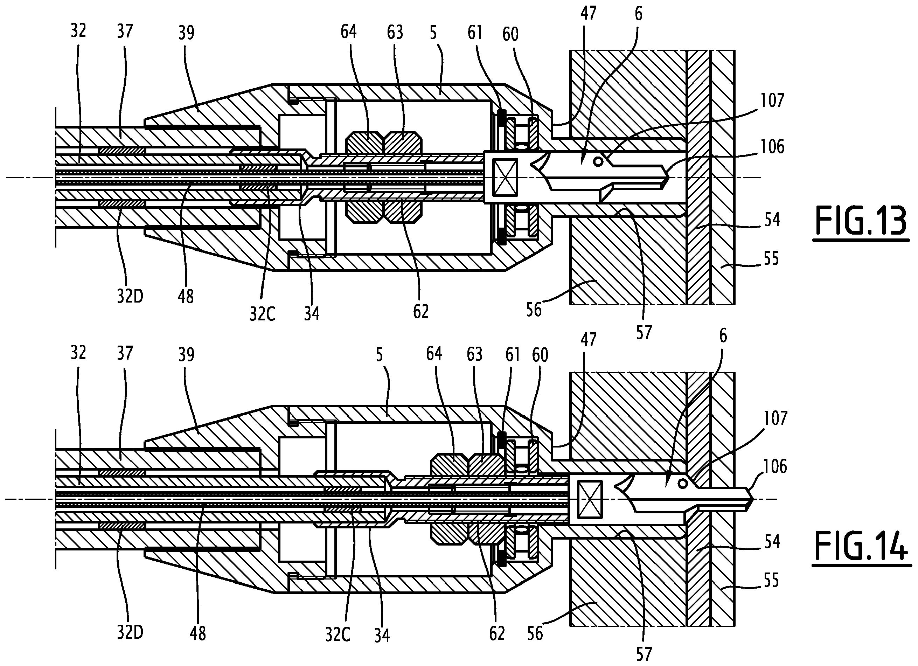

Les Figures 13 et 14 représentent une variante adaptée au fraisurage avec réalisation, à l'entrée du perçage, d'un évasement conique destiné à recevoir une tête d'organe de fixation.

Dans cette variante, le canon est muni, juste derrière l'épaulement 47, d'une butée à aiguilles annulaire 60 maintenue par un circlips 61. De plus, l'embout distal 34 comporte un tronçon fileté 62 sur lequel sont vissés de façon réglable un écrou de butée 63 et un contre-écrou de blocage 64.

Ainsi, lorsque l'outil de fraisage 106 à cône 107 est rétracté (Figure 13), la distance entre l'écrou 63 et la butée 60 définit très précisément la course de l'outil.

La course définie par l'appareil 7 est choisie légèrement supérieure à cette distance. Ainsi, lorsque l'écrou 63 arrive en contact avec la butée 60, la course complémentaire de l'appareil 7 est absorbée par un léger flambage du flexible 32, lequel se redresse au début de la course de retrait.

Dans les modes de réalisation décrits ci-dessus, et notamment en référence à la Figure 12, la mèche de l'outil 6 est guidée, par son extrémité distale, par le conduit central de la partie distale 46 du canon 5.

En variante, si on le désire, le guidage de l'outil peut être complété à l'extrémité proximale de l'outil, par le coulissement de l'embout 34 dans l'alésage central du manchon 39.

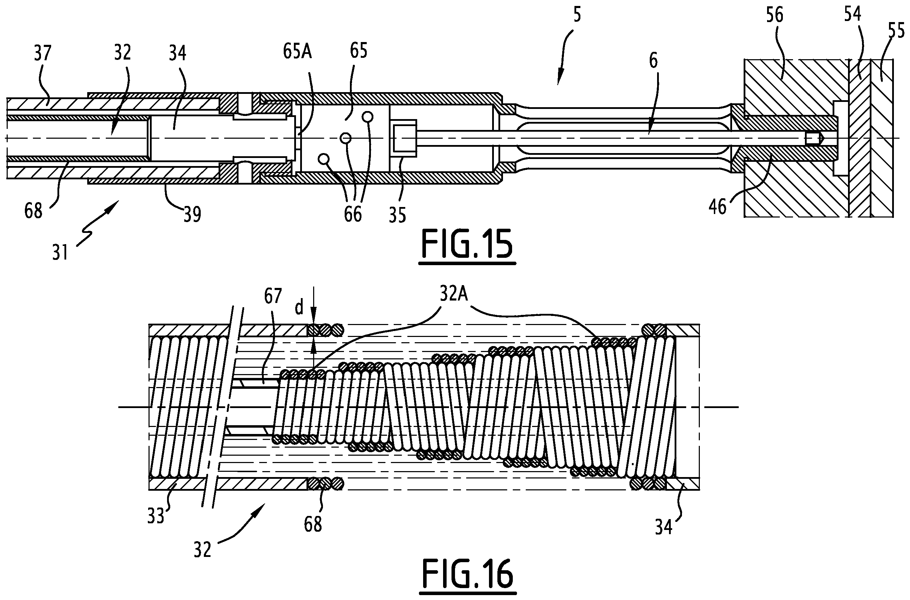

En variante encore, comme représenté à la Figure 15, le guidage de la partie proximale de l'outil peut être réalisé au moyen d'une pièce intermédiaire 65 interposée axialement entre l'embase 35 de l'outil et l'embout 34.

La pièce 65 est constituée d'un cylindre creux ayant deux parois planes d'extrémité. La paroi proximale est munie d'un embout de vissage 65A adapté pour se visser dans le filetage femelle distal de l'embout 34, cet embout 65A ayant par conséquent la même configuration de vissage que l'embase 35 de l'outil.

La paroi distale de la pièce 65 comporte, quant à elle, un filetage femelle identique à celui de l'embout 34, ce filetage recevant l'embase 35 de l'outil.

La paroi périphérique cylindrique de la pièce 65 est ajustée, quant à son diamètre, au diamètre intérieur de la partie proximale du canon 5.

Cette paroi périphérique est percée d'un certain nombre de trous 66.

Ainsi, en fonctionnement, la pièce 65 assure le guidage de la partie proximale de l'outil 6. De plus, le conduit de lubrification 48 débouche dans la cavité de la pièce 65, de sorte qu'une faible quantité de lubrifiant sort de la pièce 65 par les trous 66, en supprimant pratiquement tout frottement entre la pièce 65 et le canon 5.

Ce mode de guidage peut s'avérer suffisant pour rendre superflu le guidage de la partie distale de l'outil dans la partie distale 46 du canon 5. Dans ce cas, la partie travaillante de l'outil évolue librement dans le canon, tout en étant parfaitement positionnée dans l'espace par ce dernier. De plus, comme précédemment, les efforts axiaux qui s'exercent pendant l'usinage sont repris par le canon 5 et transmis par la gaine 37 et le tube 21 jusqu'au corps de l'appareil d'entraînement 7.

La Figure 16 illustre une variante du flexible 32 qui permet d'améliorer la capacité de transmission d'effort axial de celui-ci.

Pour cela, le flexible diffère de celui des Figures 8 et 9 par l'ajout d'une hélice supplémentaire 67 dans le conduit axial du flexible.

Cette hélice 67 est à spires jointives. Chaque spire a, en section méridienne, une forme sensiblement rectangulaire ou parallélépipédique. L'hélice 67 est plaquée par sa surface extérieure contre la nappe 32A intérieure, de par sa propre élasticité, et s'étend sur toute la longueur du flexible.

La rigidité de l'hélice 67 peut être choisie suffisante pour que cette hélice joue, à chaque extrémité du flexible, le rôle des bagues de contre-appui 32C pour le sertissage des embouts 33 et 34. Dans le cas contraire, l'hélice 67 a une longueur limitée à la distance séparant les deux bagues 32C.

Si on le désire, comme illustré également sur la Figure 16, on peut compléter le flexible 32 par une nappe extérieure 68 de fil enroulé hélicoïdalement à spires jointives entre les deux embouts d'extrémité 33 et 34. La dimension radiale d, par rapport à l'axe du flexible, de la section du fil utilisé est sensiblement égale à la différence de rayon extérieur entre d'une part la partie sertie des embouts 34, d'autre part la nappe 32A extérieure. La dimension radiale d constitue le diamètre de la section du fil utilisé si cette section est circulaire.

Grâce à cette nappe additionnelle 68, le flexible a sur toute sa longueur le même diamètre extérieur que les embouts 33 et 34, ce qui permet de réduire encore plus le jeu radial entre le flexible et la gaine qui l'entoure.

Le matériau de la nappe 68 peut être tout matériau approprié. Compte-tenu des frottements répétés auxquels elle est soumise, un fil d'acier est préféré.

Par ailleurs, dans chaque mode de réalisation, les bagues paliers 32D interposées entre le flexible 32 et la gaine 37 peuvent être en tout nombre approprié et être réparties le long du flexible. En variante, on peut utiliser un palier monobloc s'étendant sur sensiblement toute la longueur du flexible.

Par ailleurs, il peut être avantageux de faire réaliser par la machine automatique, en plus des mouvements d'avance et de rotation nécessaires à l'outil pour l'usinage, des micro-allers et retours successifs à grande fréquence, et/ou des micro-interruptions de l'avance, également à grande fréquence. Ceci facilite l'écoulement des copeaux et leur fractionnement.

On peut également, si on le souhaite doter l'installation de capacités d'adaptation de l'appareil moteur 7 en termes de couple, de vitesses et d'effort de poussée, en fonction notamment de la résistance des matériaux traversés. Ceci peut éviter de caler la machine ou de trop solliciter les outils, en tenant compte par exemple de leur usure et des profondeurs réelles traversées.

Enfin, pour limiter la pollution des éléments usinés, la lubrification qui passe par le centre du dispositif peut elle aussi être pilotée par la machine à avance automatique et s'interrompre automatiquement, par exemple juste avant que l'outil débouche ou/et à l'interface entre pièces, etc...

## Revendications

1. Rallonge pour un appareil d'entraînement motorisé (7) muni d'un corps (12) qui contient des moyens d'entraînement d'un arbre de sortie (13) en rotation,
**caractérisée en ce que** les moyens d'entraînement sont des moyens d'entrainement de l'arbre de sortie (13) en rotation et en translation par rapport au corps,
et **en ce que** la rallonge comprend :
- deux sous-ensembles (30, 31) libres en rotation et en translation l'un par rapport à l'autre, à savoir :
• un sous-ensemble intérieur (30) qui comprend un flexible (32) de transmission de couple et d'effort de poussée, muni à son extrémité proximale d'un premier connecteur d'entrée de couple (33) adapté pour se fixer sur un embout de fixation (14) de l'arbre de sortie de l'appareil, et à son extrémité distale d'une attache d'outil (34) ; et
• un sous-ensemble extérieur (31) qui comprend une gaine (37) entourant le flexible (32) avec un jeu radial, cette gaine ayant ou pouvant prendre une forme non rectiligne ; la gaine comportant à son extrémité proximale des moyens proximaux (38) de fixation au corps (12) de l'appareil d'entraînement ;
- un guide d'outil rigide (5) fixé de façon amovible à l'extrémité distale de la gaine ;
- une pré-rallonge (3) qui comprend elle-même :
• un arbre (20) de transmission de couple et d'effort de poussée muni à son extrémité proximale d'un second connecteur d'entrée de couple (23) identique en configuration audit premier connecteur d'entrée de couple, et à son extrémité distale d'un second embout de fixation identique en configuration à l'embout de fixation (14) dudit arbre de sortie (13) ; et
• un tube rigide (26) de guidage de l'arbre de transmission (20) en rotation et en translation, ce tube comportant à son extrémité proximale des moyens (27) de fixation au corps (12) de l'appareil d'entraînement (7), et à son extrémité distale des moyens (28) de fixation de l'extrémité proximale de la gaine (37).

2. Rallonge selon la revendication 1, **caractérisée en ce que** la gaine (37) porte à son extrémité distale un embout rigide (39) de fixation du guide d'outil (5).

3. Rallonge selon la revendication 1 ou 2, **caractérisée en ce que** la gaine (37) est flexible.

4. Rallonge selon l'une quelconque des revendications 1 à 3, **caractérisée en ce que** la gaine (37) porte, dans sa région distale, une poignée (50) munie d'au moins un organe de commande de l'appareil d'entraînement (12).

5. Rallonge selon l'une quelconque des revendications 1 à 4, **caractérisée** en ce le flexible (32) et l'attache d'outil (34) sont creux.

6. Rallonge selon la revendication 5, **caractérisée en ce qu'**une bague de contre-appui (32C) est disposée dans le conduit central (32B) du flexible (32), au voisinage de chaque extrémité du flexible, au droit du raccordement de celui-ci avec, respectivement, ledit premier connecteur d'entrée de couple (33) et l'attache d'outil (34).

7. Rallonge selon la revendication 5, **caractérisée en ce qu'**au moins une hélice (67) à section aplatie et à spires jointives est disposée dans le conduit central (32B) du flexible (32), sensiblement sur toute la longueur de ce conduit.

8. Rallonge selon l'une quelconque des revendications 1 à 7, **caractérisée en ce que** le flexible (32) comporte une pluralité de nappes (32A) de fils d'acier à ressort précontraintes pendant l'enroulement au voisinage de leur seuil de rupture et enroulées en hélice, les nappes successives ayant des pas opposés.

9. Rallonge selon l'une quelconque des revendications 1 à 8, **caractérisée en ce que** le flexible (32) comporte une nappe hélicoïdale extérieure (68), notamment de fil d'acier à ressort, dont la section a une dimension radiale (d) sensiblement égale à la différence de rayon extérieur entre d'une part ledit premier connecteur (33) et l'attache d'outil (34), d'autre part la partie courante du flexible.

10. Rallonge selon l'une quelconque des revendications 1 à 9, **caractérisée en ce qu'**au moins un palier (32D) est interposé entre le flexible (32) et la gaine (37).

11. Rallonge selon la revendication 10, **caractérisée en ce que** le palier est continu sur sensiblement toute la longueur du flexible ou est fractionné en tronçons répartis sur cette longueur.

12. Rallonge selon l'une quelconque des revendications 1 à 11, **caractérisée en ce qu'**une pièce de guidage d'outil (65) solidaire de l'outil (6) est interposée entre la partie proximale (35) de l'outil et l'attache d'outil (34), cette pièce coopérant avec le guide d'outil (5).

13. Rallonge selon la revendication 12, **caractérisé en ce que** la pièce de guidage (64) est creuse et comporte des perçages de sortie de lubrifiant (66) dans sa paroi périphérique.

14. Rallonge selon l'une quelconque des revendications 1 à 13, **caractérisé en ce que** le guide d'outil (5) est muni d'une butée à billes ou à aiguilles (60), et **en ce que** le flexible (32) porte au voisinage de son extrémité distale un relief (63) adapté pour coopérer avec cette butée pour limiter la course d'avance de l'outil (106).

15. Rallonge selon l'une quelconque des revendications 1 à 14, **caractérisée en ce qu'**un ou plusieurs des éléments suivants : le flexible (32), la gaine (37), l'arbre de transmission (20) et le tube rigide de guidage (26), sont monoblocs avec leurs moyens de fixation respectifs.

16. Outillage d'entraînement, **caractérisé en ce qu'**il comprend :
- un appareil d'entraînement motorisé (7) muni d'un corps (12) qui contient des moyens d'entraînement d'un arbre de sortie (13) en rotation et en translation par rapport au corps, cet arbre étant équipé d'un premier embout de fixation (14) et le corps (12) de l'appareil étant équipé d'un premier manchon de fixation (15) ;
- une rallonge (4) selon l'une quelconque des revendications 1 à 15, ledit premier connecteur d'entrée de couple (33) étant adapté pour se fixer sur ledit embout de fixation (14) et lesdits moyens proximaux de fixation (38) étant adaptés pour se fixer sur ledit premier manchon de fixation (15) ; et
- au moins un outil (6 ; 106) adapté pour être fixé à l'attache d'outil (34).

17. Outillage d'entraînement selon la revendication 16, **caractérisé en ce que** l'appareil d'entraînement comporte un capot insonorisé (8).

18. Outillage d'entraînement selon la revendication 16 ou 17, **caractérisé en ce que** l'appareil d'entraînement comporte des moyens (11) de liaison à une structure fixe (S) de support.

19. Outillage d'entraînement selon l'une quelconque des revendications 16 à 18, **caractérisé en ce que** l'outil (6 ; 106) est un outil d'usinage.

20. Outillage d'entraînement selon l'une quelconque des revendications 16 à 19, **caractérisé en ce qu'**il comprend des moyens (56) pour bloquer le guide d'outil (5) par rapport à la pièce à usiner (54, 55) et faire ainsi reprendre par le guide d'outil l'effort axial pendant l'usinage.

## Patentansprüche

1. Verlängerung für eine motorisierte Antriebsvorrichtung (7), die mit einem Mittel zum Antrieb einer Ausgangswelle (13) zur Drehung enthaltenden Körper (12) ausgerüstet ist,
**dadurch gekennzeichnet, dass** die Antriebsmittel Mittel zum Antrieb der Ausgangswelle (13) zur Drehung und zur Längsbewegung in Bezug auf den Körper sind,
und dass die Verlängerung umfasst:
- zwei Untergruppen (30, 31), die zueinander drehfrei und frei in der Längsbewegung sind, nämlich:
• eine innere Untergruppe (30), die ein flexibles Element (32) zur Übertragung eines Drehmoments und einer Schubkraft umfasst, das an seinem proximalen Ende mit einem ersten Drehmoment-Eingangsanschluss (33), der ausgebildet ist, an einem Ansatz (14) zur Befestigung der Ausgangswelle der Vorrichtung befestigt zu werden, und an seinem distalen Ende mit einer Werkzeugbefestigung (34) versehen ist; und
• eine äußere Untergruppe (31), die eine das flexible Element (32) mit einem radialen Spiel umgebende Ummantelung (37) umfasst, wobei diese Ummantelung eine nicht geradlinige Form aufweist oder diese annehmen kann; wobei die Ummantelung an ihrem proximalen Ende proximale Mittel (38) zur Befestigung an dem Körper (12) der Antriebsvorrichtung aufweist;
- eine starre Werkzeugführung (5) die in lösbarer Weise an dem distalen Ende der Ummantelung befestigt ist;
- eine Vorverlängerung (3), die selbst umfasst:
• eine Welle (20) zur Übertragung eines Drehmoments und einer Schubkraft, die an ihrem proximalen Ende mit einem zweiten Drehmoment-Eingangsanschluss (23), identisch im Aufbau zu dem ersten Drehmoment-Eingangsanschluss, und an ihrem distalen Ende mit einem zweiten Befestigungsansatz, identisch im Aufbau zu dem Ansatz (14) zur Befestigung der Ausgangswelle (13) ausgerüstet ist; und
• ein starres Rohr (26) zur Führung der Welle (20) zur Übertragung der Drehung und der Längsbewegung, wobei dieses Rohr an seinem proximalen Ende Mittel (27) zur Befestigung an dem Körper (12) der Antriebsvorrichtung (7) und an seinem distalen Ende Mittel (28) zur Befestigung des proximalen Endes der Ummantelung (37) aufweist

2. Verlängerung nach Anspruch 1, **dadurch gekennzeichnet, dass** Ummantelung (37) an ihrem distalen Ende einen starren Ansatz (39) zur Befestigung der Werkzeugführung (5) trägt.

3. Verlängerung nach Anspruch 1 oder 2, **dadurch gekennzeichnet, dass** die Ummantelung (37) flexibel ist.

4. Verlängerung nach einem beliebigen der Ansprüche 1 bis 3, **dadurch gekennzeichnet, dass** die Ummantelung (37) in ihrem distalen Bereich einen Griff (50) trägt, der mit mindestens einem Element zur Steuerung der Antriebsvorrichtung (12) versehen ist.

5. Verlängerung nach einem beliebigen der Ansprüche 1 bis 4, **dadurch gekennzeichnet, dass** das flexible Element (32) und die Werkzeugbefestigung (34) hohl sind.

6. Verlängerung nach Anspruch 5, **dadurch gekennzeichnet, dass** ein Gegenstützring (32C) in dem Mittelkanal (32B) des flexiblen Elementes (32) in der Nähe jedes Endes des flexiblen Elementes gegenüber des Anschlusses desselben mit jeweils dem ersten Drehmoment-Eingangsanschluss (33) und der Werkzeugbefestigung (34) angeordnet ist.

7. Verlängerung nach Anspruch 5, **dadurch gekennzeichnet, dass** mindestens eine Spirale (67) mit abgeflachtem Querschnitt und mit aneinanderliegenden Windungen in dem Mittelkanal (32B) des flexiblen Elementes (32) im Wesentlichen über die gesamte Länge dieses Kanals angeordnet ist.

8. Verlängerung nach einem beliebigen der Ansprüche 1 bis 7, **dadurch gekennzeichnet, dass** das flexible Element (32) eine Mehrzahl von Lagen (32A) aus Federstahldrähten, die während des Wickelns bis in die Nähe ihrer Bruchdehnung vorgespannt und spiralförmig gewickelt sind, aufweist, wobei die aufeinanderfolgenden Lagen entgegengesetzte Steigungen aufweisen.

9. Verlängerung nach einem beliebigen der Ansprüche 1 bis 8, **dadurch gekennzeichnet, dass** das flexible Element (32) eine spiralförmige Außenlage (68), insbesondere aus Federstahldraht, deren Querschnitt eine radiale Abmessung (d) im Wesentlichen gleich der Differenz des Außenradius zwischen einerseits dem ersten Anschluss (33) und der Werkzeugbefestigung (34) und andererseits dem laufenden Teil des flexiblen Elementes aufweist.

10. Verlängerung nach einem beliebigen der Ansprüche 1 bis 9, **dadurch gekennzeichnet, dass** mindestens ein Lager (32D) zwischen dem flexiblen Element (32) und der Ummantelung (37) angeordnet ist.

11. Verlängerung nach Anspruch 10, **dadurch gekennzeichnet, dass** das Lager über im Wesentlichen die gesamte Länge des flexiblen Elementes kontinuierlich verläuft oder in über diese Länge verteilte Abschnitte aufgeteilt ist.

12. Verlängerung nach einem beliebigen der Ansprüche 1 bis 11, **dadurch gekennzeichnet, dass** ein mit dem Werkzeug (6) verbundenes Bauteil (65) zur Führung des Werkzeugs zwischen dem proximalen Bereich (35) des Werkzeugs und der Werkzeugbefestigung (34) angeordnet ist, wobei dieses Bauteil mit der Werkzeugführung (5) zusammenarbeitet.

13. Verlängerung nach Anspruch 12, **dadurch gekennzeichnet, dass** das Führungsbauteil (65) hohl ist und Bohrungen für den Austritt von Schmiermittel (66) in seiner Umfangswand aufweist.

14. Verlängerung nach einem beliebigen der Ansprüche 1 bis 13, **dadurch gekennzeichnet, dass** die Werkzeugführung (5) mit einem Axialkugel- oder -nadellager(60) versehen ist und dass das flexible Element (32) in der Nähe seines distalen Endes ein Relief (63) trägt, dass angepasst ist, mit diesem Lager zusammenzuarbeiten, um den Vorschubweg (106) des Werkzeuges zu begrenzen.

15. Verlängerung nach einem beliebigen der Ansprüche 1 bis 14, **dadurch gekennzeichnet** das ein oder mehrere der folgenden Elemente einstückig mit ihren jeweiligen Befestigungsmitteln ausgebildet sind: das flexible Element (32), die Ummantelung (37), die Übertragungswelle (20) und das starre Führungsrohr (26).

16. Antriebswerkzeugausstattung, **dadurch gekennzeichnet dass** sie umfasst:
- eine motorisierte Antriebsvorrichtung (7), die mit einem Körper (12) ausgerüstet ist, der Mittel zum Antrieb einer Ausgangswelle (13) zur Drehung und zur Längsbewegung in Bezug auf den Körper enthält, wobei diese Welle mit einem ersten Befestigungsansatz (14) und der Körper (12) der Vorrichtung mit einer ersten Befestigungshülse (15) ausgerüstet ist;
- eine Verlängerung (4) nach einem beliebigen der Ansprüche 1 bis 15, wobei der erste Drehmoment-Eingangsanschluss (33) angepasst ist, an dem Befestigungsansatz (14) befestigt zu werden, und die proximalen Befestigungsmittel (38) angepasst sind, auf der ersten Befestigungshülse (15) befestigt zu werden; und
- mindestens ein Werkzeug (6; 106), das angepasst ist, an der Werkzeugbefestigung (34) befestigt zu werden.

17. Antriebswerkzeugausstattung nach Anspruch 16, **dadurch gekennzeichnet, dass** die Antriebsvorrichtung eine Schalldämpferabdeckung (8) aufweist.

18. Antriebswerkzeugausstattung nach Anspruch 16 oder 17, **dadurch gekennzeichnet, dass** die Antriebsvorrichtung Mittel (11) zur Befestigung an einer feststehenden Abstützstruktur (S) aufweist.

19. Antriebswerkzeugausstattung nach einem beliebigen der Ansprüche 16 bis 8, **dadurch gekennzeichnet, dass** das Werkzeug (6; 106) ein Bearbeitungswerkzeug ist.

20. Antriebswerkzeugausstattung nach einem beliebigen der Ansprüche 16 bis 19, **dadurch gekennzeichnet, dass** sie Mittel (56) zum Blockieren der Werkzeugführung (5) in Bezug auf das zu bearbeitende Teil (54, 55) umfasst und um so die axiale Kraft während der Bearbeitung durch die Werkzeugführung aufnehmen zu lassen.

## Claims

1. Extension piece for a motorised drive device (7) equipped with a body (12) which contains drive means for driving an output shaft (13) in rotation,
**characterised in that** the drive means are drive means for driving the output shaft (13) in rotation and in translation relative to the body,
and **in that** the extension piece comprises:
- two sub-assemblies (30, 31) which are free in rotation and in translation relative to one another, namely:
• an inner sub-assembly (30) which comprises a flexible hose (32) for transmitting torque and thrust force, equipped at its proximal end with a first torque input connector (33) adapted to be fixed to a fixing end-piece (14) of the output shaft of the device, and at its distal end with a tool attachment (34); and
• an outer sub-assembly (31) which comprises a sheath (37) surrounding the flexible hose (32) with a radial clearance, the sheath having or being able to assume a non-linear form; the sheath having at its proximal end proximal means (38) for fixing to the body (12) of the drive device;
- a rigid tool guide (5) fixed in a removable manner to the distal end of the sheath;
- a pre-extension piece (3) which itself comprises:
• a shaft (20) for transmitting torque and thrust force, equipped at its proximal end with a second torque input connector (23) identical in configuration to said first torque input connector, and at its distal end with a second fixing end-piece identical in configuration to the fixing end-piece (14) of said output shaft (13); and
• a rigid tube (26) for guiding the transmission shaft (20) in rotation and in translation, that tube having at its proximal end means (27) for fixing to the body (12) of the drive device (7), and at its distal end means (28) for fixing of the proximal end of the sheath (37).

2. Extension piece according to claim 1, **characterised in that** the sheath (37) carries at its distal end a rigid end-piece (39) for fixing of the tool guide (5).

3. Extension piece according to claim 1 or 2, **characterised in that** the sheath (37) is flexible.

4. Extension piece according to any one of claims 1 to 3, **characterised in that** the sheath (37) carries, in its distal region, a handle (50) equipped with at least one control member for controlling the drive device (12).

5. Extension piece according to any one of claims 1 to 4, **characterised in that** the flexible hose (32) and the tool attachment (34) are hollow.

6. Extension piece according to claim 5, **characterised in that** a counter-bearing ring (32C) is arranged in the central conduit (32B) of the flexible hose (32), in the vicinity of each end of the flexible hose, in line with the connection thereof to, respectively, said first torque input connector (33) and the tool attachment (34).

7. Extension piece according to claim 5, **characterised in that** at least one helix (67) with a flat cross-section and contiguous turns is arranged in the central conduit (32B) of the flexible hose (32), substantially over the entire length of the conduit.

8. Extension piece according to any one of claims 1 to 7, **characterised in that** the flexible hose (32) has a plurality of layers (32A) of spring steel wires prestressed during winding close to their breaking point and helically wound, the successive layers having opposite pitches.

9. Extension piece according to any one of claims 1 to 8, **characterised in that** the flexible hose (32) has an outer helical layer (68), especially of spring steel wire, the cross-section of which has a radial dimension (d) substantially equal to the difference in outside radius between, on the one hand, said first connector (33) and the tool attachment (34) and, on the other hand, the linear portion of the flexible hose.

10. Extension piece according to any one of claims 1 to 9, **characterised in that** at least one bearing (32D) is interposed between the flexible hose (32) and the sheath (37).

11. Extension piece according to claim 10, **characterised in that** the bearing is continuous over substantially the entire length of the flexible hose or is split into sections distributed over that length.

12. Extension piece according to any one of claims 1 to 11, **characterised in that** a tool guide element (65) secured to the tool (6) is interposed between the proximal portion (35) of the tool and the tool attachment (34), the tool guide element cooperating with the tool guide (5).

13. Extension piece according to claim 12, **characterised in that** the guide element (64) is hollow and has lubricant outlet holes (66) in its peripheral wall.

14. Extension piece according to any one of claims 1 to 13, **characterised in that** the tool guide (5) is equipped with a thrust ball bearing or a needle roller thrust bearing (60), and **in that** the flexible hose (32) carries in the vicinity of its distal end a relief portion (63) adapted to cooperate with that bearing in order to limit the feed motion of the tool (106).

15. Extension piece according to any one of claims 1 to 14, **characterised in that** one or more of the following elements: the flexible hose (32), the sheath (37), the transmission shaft (20) and the rigid guide tube (26) are integrally formed with their respective fixing means.

16. Drive equipment, **characterised in that** it comprises:
- a motorised drive device (7) equipped with a body (12) which contains drive means for driving an output shaft (13) in rotation and in translation relative to the body, the shaft being equipped with a first fixing end-piece (14) and the body (12) of the device being equipped with a first fixing sleeve (15);
- an extension piece (4) according to any one of claims 1 to 15, said first torque input connector (33) being adapted to be fixed to said fixing end-piece (14) and said proximal fixing means (38) being adapted to be fixed to said first fixing sleeve (15); and
- at least one tool (6; 106) adapted to be fixed to the tool attachment (34).

17. Drive equipment according to claim 16, **characterised in that** the drive device comprises a soundproof cover (8).

18. Drive equipment according to claim 16 or 17, **characterised in that** the drive device has means (11) for connection to a fixed support structure (S).

19. Drive equipment according to any one of claims 16 to 18, **characterised in that** the tool (6; 106) is a machining tool.

20. Drive equipment according to any one of claims 16 to 19, **characterised in that** it comprises means (56) for blocking the tool guide (5) relative to the part to be machined (54, 55) and thus causing the axial force during machining to be absorbed by the tool guide.
